# FASCICULE DE BREVET EUROPEEN

(11) **EP 3 704 396 B1**
(45) Date de publication et mention de la délivrance du brevet: **07.12.2022**
(21) Numéro de dépôt: 18789140.3
(22) Date de dépôt: 18.10.2018
(51) Int. Cl.: F16F 7/12

(54) **ABSORBEUR D'ÉNERGIE POUR SIÈGE D'AÉRONEF**
ENERGIEABSORBER FÜR EINEN LUFTFAHRZEUGSITZ
ENERGY ABSORBER FOR AN AIRCRAFT SEAT

(30) Priorité: 31.10.2017 FR 1771148
(43) Date de publication de la demande: 09.09.2020
(73) Titulaire: Safran Seats, 78373 Plaisir (FR)
(72) Inventeur: DHERMAND, Julien, 36100 Issoudun (FR)
(74) Mandataire: Marconnet, Sébastien
(86) Numéro de dépôt international: PCT/EP2018/078605
(87) Numéro de publication internationale: WO 2019/086264

(56) Documents cités:
- DE-A1-102006 023 688
- FR-A1- 2 695 177
- FR-A1- 2 930 520
- US-A- 5 961 146
- US-A1- 2005 012 319

## Description

La présente invention porte sur un absorbeur d'énergie pour siège d'aéronef.

L'invention trouve une application particulièrement avantageuse, mais non exclusive, avec les sièges d'hélicoptère de type monoplace ou multiplaces. Le siège d'hélicoptère pourra être un siège pilote ou un siège passager.

Le document EP2113677 décrit un absorbeur d'énergie muni d'une portion absorbante s'étendant entre un premier et un deuxième point d'ancrage. La portion absorbante comporte au moins un élément filiforme solide se déformant élastiquement lors d'une sollicitation en traction inférieure à un seuil prédéterminé et plastiquement lors d'une sollicitation en traction supérieure audit seuil prédéterminé. Le ou les éléments filiformes sont munis d'une succession de segments droits et de segments en arc de cercle reliant deux segments droits successifs. L'invention vise à améliorer le contrôle de l'allongement d'un tel dispositif. **< A >**

A cet effet, l'invention a pour objet un absorbeur d'énergie pour siège d'aéronef, notamment pour un siège d'hélicoptère, comportant au moins un élément d'absorption d'énergie ayant:
- un premier point d'ancrage et un deuxième point d'ancrage,
- une zone d'absorption d'énergie s'étendant entre le premier point d'ancrage et le deuxième point d'ancrage, ladite zone d'absorption d'énergie étant apte à s'étirer lors de l'application d'un effort de traction entre le premier point d'ancrage et le deuxième point d'ancrage,
- caractérisé en ce que la zone d'absorption d'énergie présente une structure maillée comportant une pluralité de brins reliés entre eux par des portions de jonction, et en ce qu'au moins une portion de jonction assure une jonction entre au moins trois brins de ladite zone d'absorption d'énergie.

### < A >

Le document DE102006023688 décrit un absorbeur d'énergie mécanique destiné à s'étendre dans la direction d'un axe d'étirement lors d'une phase de déformation.

Le document US5961146 décrit un amortisseur de chocs comprenant un premier support destiné à être fixé à une colonne de direction et un second support formé d'un seul tenant avec une carrosserie d'un véhicule.

Le document FR2695177 décrit un dispositif d'absorption d'énergie à forte capacité d'allongement formé par un élément métallique longitudinal comportant, d'une part, une succession de mailles susceptibles d'être déformées plastiquement selon une direction sensiblement perpendiculaire à leur orientation initiale pour s'ouvrir progressivement en fonction de l'effort de traction appliqué et, d'autre part, des moyens d'accrochage à un point d'ancrage fixe et à un point d'ancrage mobile.

Le document US2005/012319 décrit un dispositif de limitation de charge pour un dispositif de retenue d'occupants de véhicule. Le dispositif de limitation de charge comprend un élément longitudinal de limitation de charge connecté entre le dispositif de retenue des occupants du véhicule et un point d'ancrage tel qu'un siège de véhicule ou une partie structurelle du véhicule.

Selon l'invention, l'élément d'absorption d'énergie présente une configuration dissymétrique par rapport à un axe de traction passant par le premier point d'ancrage et le deuxième point d'ancrage.

Selon une réalisation, la zone d'absorption d'énergie comporte au moins une partie présentant longitudinalement une succession de rangées de portions de jonction, chaque rangée comprenant deux portions de jonction.

Selon une réalisation, les brins de la zone d'absorption d'énergie présentent des dimensions et/ou des orientations et/ou des types de matériaux variés de manière à s'adapter à une morphologie d'un occupant.

Selon une réalisation, ledit absorbeur d'énergie comporte une pluralité d'éléments d'absorption d'énergie empilés les uns sur les autres et configurés pour s'activer en cascade en fonction d'une morphologie d'un occupant.

Selon une réalisation, l'élément d'absorption d'énergie est réalisé dans un matériau métallique, notamment en acier inoxydable.

L'invention a également pour objet un siège d'aéronef, notamment un siège d'hélicoptère, caractérisé en ce qu'il comporte un absorbeur d'énergie tel que précédemment défini.

Selon une réalisation, ledit siège d'aéronef comporte:
- deux pieds de support munis d'attache de fixation à des rails de l'aéronef,
- une structure d'assise ayant un bord avant monté rotatif par rapport aux pieds de support et un bord arrière monté suspendu par rapport aux pieds de support par l'intermédiaire d'au moins un absorbeur d'énergie.

Selon une réalisation, l'absorbeur d'énergie comporte un premier point d'ancrage coopérant avec un axe solidaire d'un pied de support et un deuxième point d'ancrage coopérant avec un axe solidaire du bord arrière de la structure d'assise.

Selon une réalisation, l'axe solidaire du bord arrière de la structure d'assise est inséré à l'intérieur d'une rainure ménagée dans un montant du pied de support correspondant, ladite rainure étant apte à guider un déplacement du bord arrière de la structure d'assise lorsqu'un effort de traction est appliqué entre le premier point d'ancrage et le deuxième point d'ancrage.

Selon une réalisation, ledit siège d'aéronef comporte un capot de protection de l'absorbeur d'énergie.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- Les figures 1a et 1b sont des vues en perspective d'éléments d'absorption d'énergie de type symétrique non conforme à l'invention;
- La figure 2 montre une courbe d'évolution d'une contrainte en fonction d'un étirement d'un absorbeur d'énergie de type symétrique;
- La figure 3 est une vue en perspective d'un élément d'absorption d'énergie selon l'invention de type dissymétrique;
- La figure 4 montre des courbes d'évolution d'une contrainte en fonction d'un étirement d'un absorbeur d'énergie dissymétrique respectivement pour un élément seul, deux éléments empilés, et trois éléments empilés ayant chacun une épaisseur de l'ordre de 1.5mm;
- La figure 5 montre des courbes de contrainte pour un élément d'absorption d'énergie ayant une épaisseur de 3mm et deux éléments d'absorption d'énergie empilés ayant chacun une épaisseur de 3mm;
- Les figures 6a et 6b illustrent des variantes de réalisation d'un absorbeur d'énergie dissymétrique permettant de s'adapter à la morphologie d'un occupant;
- La figure 7 est une vue en perspective d'un siège d'hélicoptère intégrant deux absorbeurs d'énergie selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Les termes relatifs du type "longitudinal" et "transversal" sont entendus par référence à une direction d'allongement longitudinal d'un élément d'absorption d'énergie selon la présente invention.

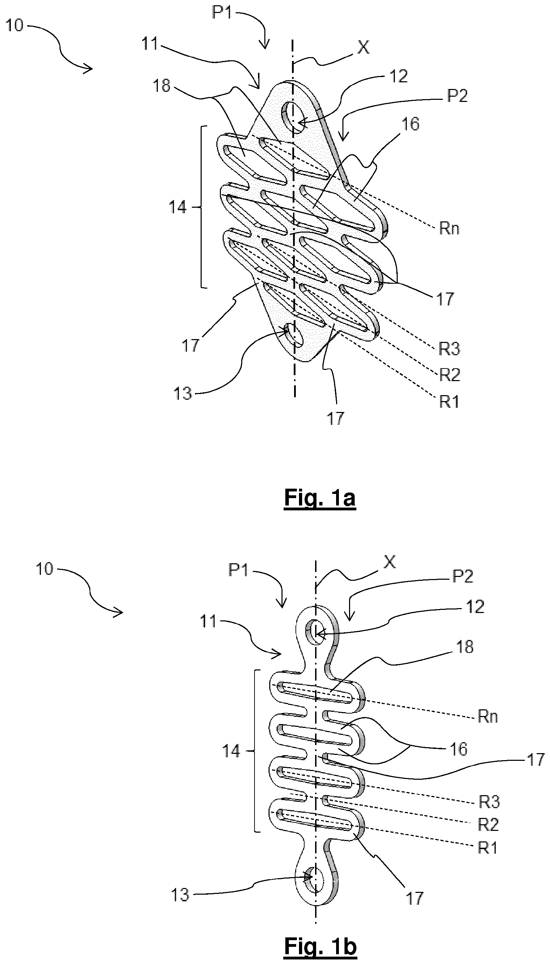

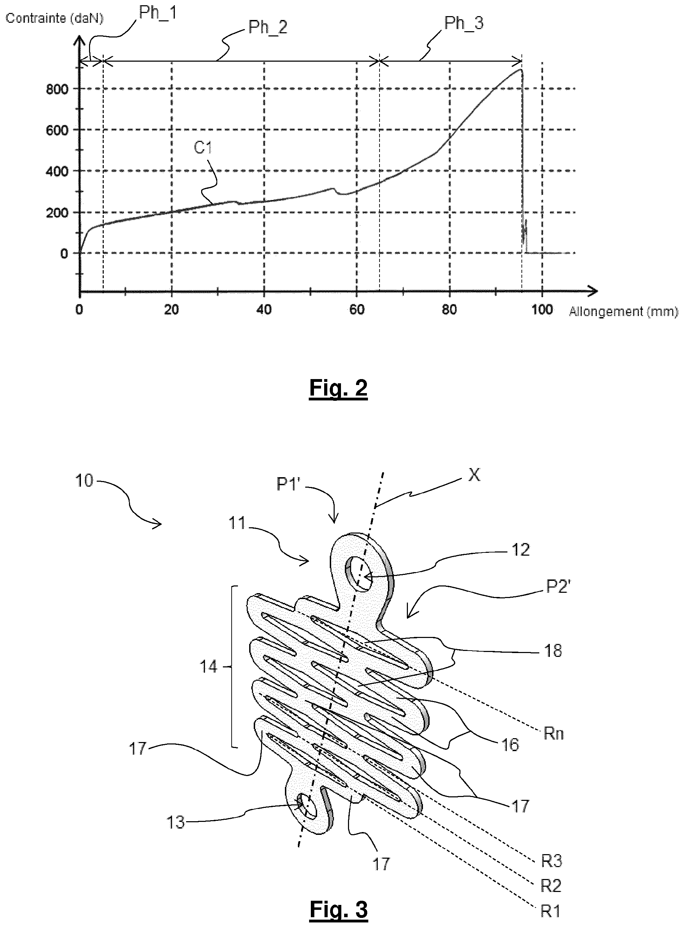

Les figures 1a, 1b et 3 montrent un absorbeur d'énergie 10 pour siège d'aéronef, notamment pour un siège d'hélicoptère, comportant au moins un élément d'absorption d'énergie 11.

Cet élément 11 comprend un premier point d'ancrage 12 et un deuxième point d'ancrage 13, ainsi qu'une zone d'absorption d'énergie 14 s'étendant entre le premier point d'ancrage 12 et le deuxième point d'ancrage 13. Cette zone d'absorption d'énergie 14 est apte à s'étirer lors de l'application d'un effort de traction entre le premier point d'ancrage 12 et le deuxième point d'ancrage 13.

La zone d'absorption d'énergie 14 présente une structure maillée comportant une pluralité de brins 16 reliés entre eux par des portions de jonction 17, un brin 16 s'étendant entre deux portions de jonction 17 successives. En outre, au moins une portion de jonction 17 assure une jonction entre au moins trois brins 16 de ladite zone d'absorption d'énergie 14. Les brins 16 sont avantageusement rectilignes.

Les brins 17 présentent une orientation inclinée par rapport à l'horizontale à l'état non contraint, de sorte que les mailles de la zone 14 présentent une forme en losange. Toutefois, l'inclinaison des brins 17 pourra être adaptée en fonction de l'application. En particulier, les brins 17 pourront présenter une orientation horizontale. Les brins 17 pourront également présenter une même longueur ou des longueurs différentes les uns par rapport aux autres.

Dans le mode de réalisation des figures 1a et 1b, l'élément d'absorption d'énergie 11 présente une configuration symétrique par rapport à un axe de traction X passant par le premier point d'ancrage 12 et le deuxième point d'ancrage 13. Ainsi, il existe une correspondance exacte entre les deux parties P1, P2 situées de part et d'autre de l'axe de traction X qui présentent les mêmes dimensions et les mêmes angles.

Dans le mode de réalisation de la figure 1a, la zone d'absorption d'énergie 14 comporte au moins une partie présentant longitudinalement une alternance régulière d'une rangée ayant deux portions de jonction 17 et d'une rangée ayant trois portions de jonction 17. Ainsi, dans l'exemple représenté, on distingue une succession longitudinale de rangées R1-Rn, la rangée R1 ayant deux portions de jonction 17 puis la rangée R2 ayant trois portions de jonction 17 puis la rangée R3 ayant deux portions de jonction 17 et ainsi de suite suivant au moins une partie de la zone d'absorption d'énergie 14, de préférence suivant toute la zone d'absorption d'énergie 14.

Dans le mode de réalisation de la figure 1b, la zone d'absorption d'énergie 14 comporte au moins une partie présentant longitudinalement une alternance régulière d'une rangée ayant deux portions de jonction 17 et d'une rangée ayant une seule portion de jonction 17. Ainsi, dans l'exemple représenté, on distingue une succession longitudinale de rangées R1-Rn, une rangée R1 ayant deux portions de jonction 17 puis une rangée R2 ayant une seule portion de jonction 17, puis une rangée R3 ayant deux portions de jonction 17 et ainsi de suite suivant au moins une partie de la zone d'absorption d'énergie 14, de préférence suivant toute la zone d'absorption d'énergie 14.

La figure 2 montre une courbe C1 d'évolution d'une contrainte en fonction d'un étirement d'un absorbeur d'énergie 10 de type symétrique lors de l'application d'un effort de traction entre les points d'ancrage 12, 13. La courbe C1 présente une première phase Ph_1 de montée en charge, puis une phase d'allongement Ph_2 dans laquelle la variation de la contrainte est faible de sorte que l'effort subi par le siège est contrôlée. Au cours d'une phase Ph_3, le matériau se déforme jusqu'à la rupture.

Dans le mode de réalisation de la figure 3, l'élément d'absorption d'énergie 11 présente une configuration dissymétrique par rapport à l'axe de traction X passant par le premier point d'ancrage 12 et le deuxième point d'ancrage 13. Dans ce cas, il n'existe pas de correspondance exacte entre les deux parties P1', P2' situées de part et d'autre de l'axe de traction X qui n'ont pas les mêmes dimensions et/ou pas les mêmes angles.

La zone d'absorption d'énergie 14 comporte au moins une partie présentant longitudinalement une succession de rangées transversales R1-Rn de portions de jonction 17. Chaque rangée R1-Rn comprend deux portions de jonction 17. A l'exception des rangées d'extrémité dans chacune lesquelles une jonction 17 relie deux brins 16 et une jonction 17 relie trois brins, les rangées intermédiaires comportent chacune une portion de jonction 17 reliant deux brins 16 entre eux et une portion de jonction 17 reliant quatre brins 16 entre eux.

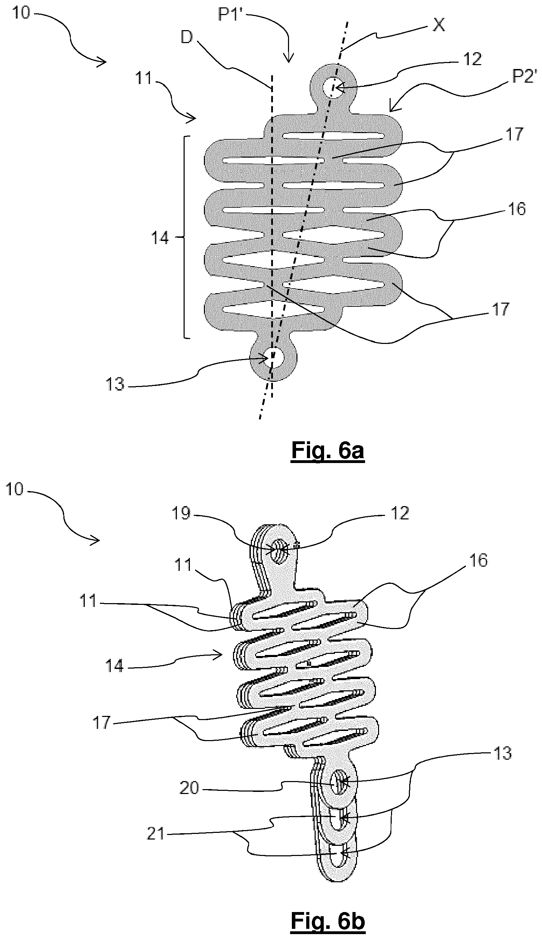

Sur l'exemple représenté, les points d'ancrage 12, 13 sont décalés l'un par rapport à l'autre suivant une direction verticale D représentée en traits discontinus sur la figure 6a. En variante, les points d'ancrage 12, 13 pourront être alignés l'un par rapport à l'autre suivant cette direction verticale D.

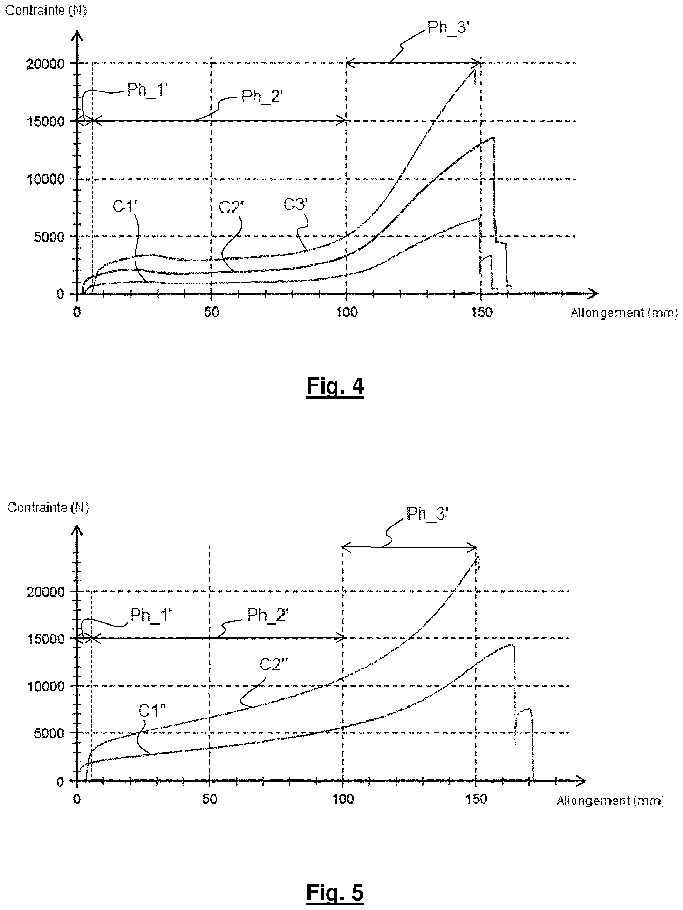

La figure 4 montre des courbes C1', C2', C3' d'évolution de la contrainte en fonction de l'étirement d'un absorbeur d'énergie 10 dissymétrique lors de l'application d'un effort de traction entre les deux points d'ancrage 12, 13. Chaque courbe présente une première phase Ph_1' de montée en charge, puis une phase d'allongement Ph_2' étendue dans laquelle la variation de la contrainte est sensiblement constante de sorte que l'effort subi par le siège est contrôlé. Au cours d'une phase Ph_3', le matériau se déforme jusqu'à la rupture. Les courbes C1', C2', et C3' ont respectivement été obtenues pour un seul élément 11, deux éléments 11, et trois éléments d'absorption d'énergie 11 empilés les uns sur les autres. On remarque que le nombre d'éléments 11 permet d'adapter le niveau des contraintes subies par l'absorbeur d'énergie 10.

Ces courbes C1', C2', C3' ont été obtenues pour des éléments 11 ayant chacun une épaisseur de l'ordre de 1.5mm. On remarque que des éléments 11 ayant une épaisseur de 3mm ont tendance à perdre le plateau de contrainte lors de la phase Ph_3' (cf. figure 5 avec la courbe C1" obtenue avec un élément 11 de 3mm et la courbe C2" obtenue avec deux éléments 11 empilés de 3mm chacun).

Avantageusement, un élément d'absorption d'énergie 11 présente donc une épaisseur comprise entre 1mm et 3mm et valant de préférence environ 1.5mm (par "environ" on entend une variation de plus ou moins 10% autour de cette valeur). La longueur de l'élément 11 est environ de 10cm à l'état non contraint, c'est-à-dire avant étirement. L'élément 11 est réalisé de préférence dans un matériau métallique, notamment en acier inoxydable. Bien entendu, le matériau ainsi que les dimensions, en particulier la longueur d'un élément d'absorption d'énergie 11, pourront être adaptés en fonction de l'application.

Un élément 11 pourra être obtenu par découpe laser d'une plaque métallique. L'élément 11 de la figure 1a pourra ainsi être réalisé par découpe du contour dans une plaque métallique puis réalisation de trois lignes verticales de trous 18 en quinconce. Ainsi, les trous 18 d'une ligne donnée se situent entre deux trous 18 d'une ligne adjacente. Les trous 18 pourront par exemple prendre une forme en losange.

L'élément 11 de la figure 1b pourra être réalisé par découpe du contour dans une plaque métallique puis réalisation d'une ligne verticale de trous 18 ayant une forme rectangulaire.

L'élément 11 de la figure 3 pourra être réalisé par découpe du contour dans une plaque métallique puis réalisation de deux lignes verticales de trous 18 en quinconce. Ainsi, les trous 18 d'une ligne donnée se situent entre deux trous 18 de la ligne verticale de trous 18 adjacente. Les trous 18 pourront par exemple prendre une forme en losange.

Il est possible d'ajuster la configuration de l'absorbeur d'énergie 10 (forme et/ou dimensions) pour s'adapter aux morphologies des occupants allant du 5éme percentile femme au 95éme percentile homme. On cherche alors à lisser la courbe de contrainte.

Ainsi, les brins 16 de la zone d'absorption d'énergie 14 peuvent présenter des dimensions et/ou des orientations et/ou des types de matériau variés de manière à s'adapter à une morphologie d'un occupant. Dans l'exemple représenté sur la figure 6a, le maillage de la partie haute de l'élément 11 comporte à l'état non contraint des brins 16 ayant une orientation horizontale; tandis que le maillage de la partie basse comporte à l'état non contraint des brins 16 ayant une orientation inclinée par rapport à une direction horizontale.

Dans le mode de réalisation de la figure 6b, une pluralité d'éléments d'absorption d'énergie 11 sont empilés les uns sur les autres et configurés pour s'activer en cascade en fonction d'une morphologie d'un occupant.

A cet effet, les premiers points d'ancrage 12 des éléments 11 superposés présentent des trous 19 qui coïncident les uns par rapport aux autres et qui sont destinés à coopérer avec un axe fixe du siège. En outre, le deuxième point d'ancrage 13 du premier élément 11 présente un trou circulaire 20 pour coopérer avec un axe du siège mobile en cas de choc engendrant l'étirement de l'élément 11, comme cela est expliqué plus en détails ci-après. Les éléments 11 suivants comportent des points d'ancrage 13 constitués par des trous oblongs 21 ayant des bords d'extrémités décalés longitudinalement les uns par rapport aux autres. La longueur des trous oblongs 21 augmente lorsque l'on s'éloigne du point d'ancrage 13 du premier élément 11.

Ainsi, un occupant du 5ième percentile aura tendance à active un seul des éléments 11, tandis qu'une personne plus corpulente du 95ème percentile aura tendance à activer successivement deux, voire trois éléments d'absorption d'énergie 11. On obtient ainsi un effet de palier sur la courbe de contrainte de l'absorbeur 10. Il existe ainsi une progression dans les efforts subis lors d'une collision en fonction de la morphologie de l'occupant.

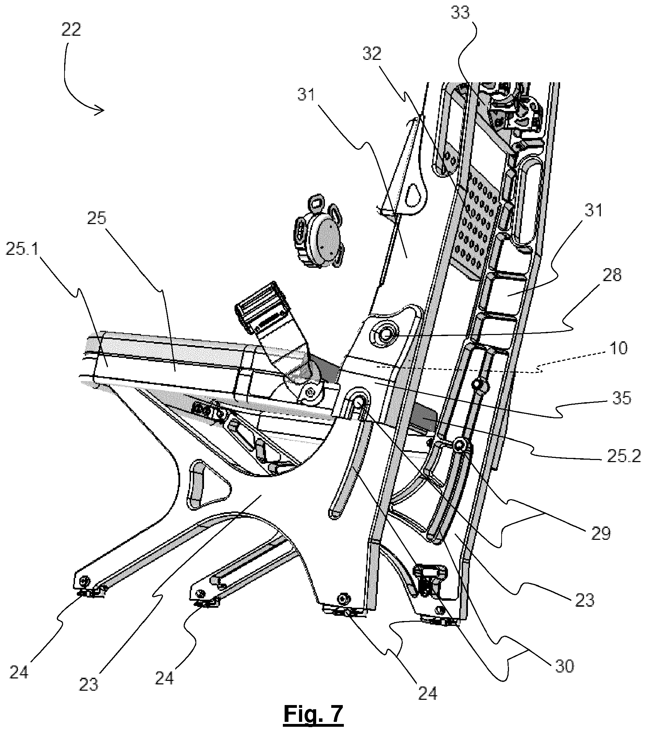

La figure 7 montre un siège d'hélicoptère 22 comportant deux pieds de support 23 munis d'attache de fixation 24 à des rails de l'aéronef. Une structure d'assise 25 comporte un bord avant 25.1 monté rotatif par rapport aux pieds de support 23 et un bord arrière 25.2 monté suspendu par rapport aux pieds de support 23 par l'intermédiaire d'au moins un absorbeur d'énergie 10.

A cet effet, un premier point d'ancrage 12 de l'absorbeur d'énergie 10 coopère avec un axe 28 solidaire d'un pied de support 23 et un deuxième point d'ancrage 13 coopère avec un axe 29 solidaire du bord arrière 25.2 de la structure d'assise 25.

L'axe 29 solidaire du bord arrière 25.2 de la structure d'assise 25 est inséré à l'intérieur d'une rainure 30 ménagée dans un montant 31 du pied de support 23 correspondant. La rainure 30 est apte à guider un déplacement du bord arrière 25.2 de la structure d'assise 25 lorsqu'un effort de traction est appliqué entre les points d'ancrage 12, 13 lors d'un choc.

Ainsi, lors d'un choc vertical, la structure d'assise 25 se déplace vers le bas suite à l'étirement de l'absorbeur d'énergie 10 en tournant autour de l'axe 28 solidaire du pied de support 23. Le mouvement de l'assise sous le siège 22 est contrôlé grâce à la rainure 30 qui guide l'axe 29 du bord arrière 25.2 connecté au point d'ancrage 13 de l'absorbeur 10, le premier point d'ancrage 12 fixé au pied de support 23 formant châssis étant immobile.

Avantageusement, un absorbeur d'énergie 10 est disposé de chaque côté de la structure d'assise 25. Un capot de protection 35 de l'absorbeur d'énergie 10 est monté sur chaque montant 31 des pieds de support 23.

Le siège 22 pourra également comporter un support lombaire 32 associé à une portion haute de dossier 33 s'étendant entre les deux pieds de support 23. En variante, il est possible d'utiliser un dossier classique formé par une seule pièce. En partie haute, le siège 22 comporte une traverse de liaison entre les deux pieds de support 23 ainsi qu'une têtière.

Afin de réaliser un absorbeur d'énergie 10, il est également possible de réaliser des découpes partielles dans la zone d'absorption d'énergie 14, de manière à affaiblir mécaniquement cette zone 14 et favoriser son étirement lors de l'application d'un effort de traction entre les points d'ancrage 12 et 13. Ces découpes partielles pourront être régulières ou non pour arriver à obtenir des courbes de contrainte semblables aux courbes C1', C2', C3'.

## Revendications

1. Absorbeur d'énergie (10) pour siège d'aéronef (22), notamment pour un siège d'hélicoptère, comportant au moins un élément d'absorption d'énergie (11) ayant:
- un premier point d'ancrage (12) et un deuxième point d'ancrage (13),
- une zone d'absorption d'énergie (14) s'étendant entre le premier point d'ancrage (12) et le deuxième point d'ancrage (13), ladite zone d'absorption d'énergie (14) étant apte à s'étirer lors de l'application d'un effort de traction entre le premier point d'ancrage (12) et le deuxième point d'ancrage (13),
- dans lequel la zone d'absorption d'énergie (14) présente une structure maillée comportant une pluralité de brins (16) reliés entre eux par des portions de jonction (17), et dans lequel au moins une portion de jonction (17) assure une jonction entre au moins trois brins (16) de ladite zone d'absorption d'énergie (14), **caractérisé en ce que** l'élément d'absorption d'énergie (11) présente une configuration dissymétrique par rapport à un axe de traction (X) passant par le premier point d'ancrage (12) et le deuxième point d'ancrage (13).

2. Absorbeur d'énergie (10) selon la revendication 1, **caractérisé en ce que** la zone d'absorption d'énergie (14) comporte au moins une partie présentant longitudinalement une succession de rangées (R1-Rn) de portions de jonction (17), chaque rangée comprenant deux portions de jonction (17).

3. Absorbeur d'énergie (10) selon l'une quelconque des revendications 1 à 2, **caractérisé en ce que** les brins (16) de la zone d'absorption d'énergie (14) présentent des dimensions et/ou des orientations et/ou des types de matériaux variés de manière à s'adapter à une morphologie d'un occupant.

4. Absorbeur d'énergie (10) selon l'une quelconque des revendications 1 à 3, **caractérisé en ce qu'**il comporte une pluralité d'éléments d'absorption d'énergie (11) empilés les uns sur les autres et configurés pour s'activer en cascade en fonction d'une morphologie d'un occupant.

5. Absorbeur d'énergie (10) selon l'une quelconque des revendications 1 à 4, **caractérisé en ce que** l'élément d'absorption d'énergie (11) est réalisé dans un matériau métallique, notamment en acier inoxydable.

6. Siège d'aéronef (22), notamment un siège d'hélicoptère, **caractérisé en ce qu'**il comporte au moins un absorbeur d'énergie (10) tel que défini selon l'une quelconque des revendications précédentes.

7. Siège d'aéronef (22) selon la revendication 6, **caractérisé en ce qu'**il comporte:
- deux pieds de support (23) munis d'attache de fixation (24) à des rails de l'aéronef,
- une structure d'assise (25) ayant un bord avant (25.1) monté rotatif par rapport aux pieds de support (23) et un bord arrière (25.2) monté suspendu par rapport aux pieds de support (23) par l'intermédiaire d'au moins un absorbeur d'énergie (10).

8. Siège d'aéronef (22) selon la revendication 7, **caractérisé en ce que** l'absorbeur d'énergie (10) comporte un premier point d'ancrage (12) coopérant avec un axe (28) solidaire d'un pied de support (23) et un deuxième point d'ancrage (13) coopérant avec un axe (29) solidaire du bord arrière (25.2) de la structure d'assise (25).

9. Siège d'aéronef (22) selon la revendication 8, **caractérisé en ce que** l'axe (29) solidaire du bord arrière (25.2) de la structure d'assise (25) est inséré à l'intérieur d'une rainure (30) ménagée dans un montant (31) du pied de support (23) correspondant, ladite rainure (30) étant apte à guider un déplacement du bord arrière (25.2) de la structure d'assise (25) lorsqu'un effort de traction est appliqué entre le premier point d'ancrage (12) et le deuxième point d'ancrage (13).

10. Siège d'aéronef (22) selon l'une quelconque des revendications 6 à 9, **caractérisé en ce qu'**il comporte un capot de protection (35) de l'absorbeur d'énergie (10).

## Patentansprüche

1. Energieabsorber (10) für einen Flugzeugsitz (22), insbesondere für einen Hubschraubersitz, mit mindestens einem Energieabsorptionselement (11), aufweisend:
- einen ersten Verankerungspunkt (12) und einen zweiten Verankerungspunkt (13),
- eine sich zwischen dem ersten Verankerungspunkt (12) und dem zweiten Verankerungspunkt (13) erstreckende Energieabsorptionszone (14), wobei die Energieabsorptionszone (14) beim Aufbringen einer Zugkraft zwischen dem ersten Verankerungspunkt (12) und dem zweiten Verankerungspunkt (13) dehnbar ist,
- wobei die Energieabsorptionszone (14) eine Maschenstruktur mit mehreren mittels Verbindungsabschnitten (17) miteinander verbundenen Strängen (16) aufweist, und wobei mindestens ein Verbindungsabschnitt (17) eine Verbindung zwischen mindestens drei Strängen (16) der Energieabsorptionszone (14) bereitstellt,
**dadurch gekennzeichnet, dass** das Energieabsorptionselement (11) eine asymmetrische Konfiguration bezüglich einer durch den ersten Verankerungspunkt (12) und den zweiten Verankerungspunkt (13) verlaufenden Zugachse (X) aufweist.

2. Energieabsorber (10) nach Anspruch 1, **dadurch gekennzeichnet, dass** die Energieabsorptionszone (14) mindestens einen Teil umfasst, der in Längsrichtung eine Folge von Reihen (R1-Rn) von Verbindungsabschnitten (17) umfasst, wobei jede Reihe zwei Verbindungsabschnitte (17) umfasst.

3. Energieabsorber (10) nach einem der Ansprüche 1 bis 2, **dadurch gekennzeichnet, dass** die Stränge (16) der Energieabsorptionszone (14) unterschiedliche Abmessungen und/oder Orientierungen und/oder Materialarten zum Anpassen an die Morphologie eines Insassen aufweisen.

4. Energieabsorber (10) nach einem der Ansprüche 1 bis 3, **dadurch gekennzeichnet, dass** er mehrere übereinander gestapelte Energieabsorptionselemente (11) umfasst, die so konfiguriert sind, dass sie in Kaskade gemäß der Morphologie eines Insassen aktiviert werden.

5. Energieabsorber (10) nach einem der Ansprüche 1 bis 4, **dadurch gekennzeichnet, dass** das Energieabsorptionselement (11) aus einem metallischen Material, insbesondere Edelstahl, hergestellt ist.

6. Flugzeugsitz (22), insbesondere Hubschraubersitz, **dadurch gekennzeichnet, dass** er mindestens einen Energieabsorber (10) nach einem der vorhergehenden Ansprüche umfasst.

7. Flugzeugsitz (22) nach Anspruch 6, **dadurch gekennzeichnet, dass** er umfasst:
- zwei Stützbeine (23) mit Befestigungselementen (24) zur Befestigung an Schienen des Flugzeugs,
- eine Sitzflächenstruktur (25) mit einer in Bezug auf die Stützbeine (23) drehbar gelagerten Vorderkante (25.1) und einer in Bezug auf die Stützbeine (23) über zumindest einen Energieabsorber (10) hängend gelagerten Hinterkante (25.2).

8. Flugzeugsitz (22) nach Anspruch 7, **dadurch gekennzeichnet, dass** der Energieabsorber (10) einen ersten Verankerungspunkt (12), der mit einem mit einem Stützbein (23) einstückigen Zapfen (28) zusammenwirkt, und einen zweiten Verankerungspunkt (13), der mit einem mit der Hinterkante (25.2) der Sitzflächenstruktur (25) einstückigen Zapfen (29) zusammenwirkt, umfasst.

9. Flugzeugsitz (22) nach Anspruch 8, **dadurch gekennzeichnet, dass** der Zapfen (29), der einstückig mit der Hinterkante (25.2) der Sitzflächenstruktur (25) ist, in eine Nut (30) in einem Pfosten (31) des entsprechenden Stützbeins (23) eingesetzt ist, wobei die Nut (30) eine Bewegung der Hinterkante (25.2) der Sitzflächenstruktur (25) führen kann, wenn eine Zugkraft zwischen dem ersten Verankerungspunkt (12) und dem zweiten Verankerungspunkt (13) aufgebracht wird.

10. Flugzeugsitz (22) nach einem der Ansprüche 6 bis 9, **dadurch gekennzeichnet, dass** er eine Schutzabdeckung (35) für den Energieabsorber (10) umfasst.

## Claims

1. Energy absorber (10) for an aircraft seat (22), in particular for a helicopter seat, said energy absorber comprising at least one energy absorption element (11) which comprises:
- a first anchoring point (12) and a second anchoring point (13),
- an energy absorption zone (14) extending between the first anchoring point (12) and the second anchoring point (13), said energy absorption zone (14) being able to stretch during the application of a tensile force between the first anchoring point (12) and the second anchoring point (13),
- wherein the energy absorption zone (14) has a mesh structure comprising a plurality of strands (16) interconnected by means of junction portions (17), and wherein at least one junction portion (17) provides a junction between at least three strands (16) of said energy absorption zone (14),
**characterized in that** the energy absorption element (11) has an asymmetrical configuration with respect to a traction axis (X) passing through the first anchoring point (12) and the second anchoring point (13).

2. Energy absorber (10) according to claim 1, **characterized in that** the energy absorption zone (14) comprises at least one part longitudinally including a succession of rows (R1-Rn) of junction portions (17), each row comprising two junction portions (17).

3. Energy absorber (10) according to any one of claims 1 to 2, **characterized in that** the strands (16) of the energy absorption zone (14) have various dimensions and/or orientations and/or types of materials so as to adapt to the morphology of an occupant.

4. Energy absorber (10) according to any one of claims 1 to 3, **characterized in that** it comprises a plurality of energy absorption elements (11) stacked on top of each other and configured to be activated in cascade according to an occupant's morphology.

5. Energy absorber (10) according to any one of claims 1 to 4, **characterized in that** the energy absorption element (11) is made of a metallic material, in particular stainless steel.

6. Aircraft seat (22), in particular a helicopter seat, **characterized in that** it comprises at least one energy absorber (10) as defined according to any one of the preceding claims.

7. Aircraft seat (22) according to claim 6, **characterized in that** it comprises:
- two support legs (23) provided with fasteners (24) for the fixation to rails of the aircraft,
- a seating surface structure (25) having a front edge (25.1) rotatably mounted with respect to the support legs (23) and a rear edge (25.2) mounted so as to be suspended with respect to the support legs (23) via at least one energy absorber (10).

8. Aircraft seat (22) according to claim 7, **characterized in that** the energy absorber (10) comprises a first anchoring point (12) cooperating with a pin (28) connected to a support leg (23) and a second anchoring point (13) cooperating with a pin (29) connected to the rear edge (25.2) of the seating surface structure (25).

9. Aircraft seat (22) according to claim 8, **characterized in that** the pin (29) connected to the rear edge (25.2) of the seating surface structure (25) is inserted into a groove (30) in an upright (31) of the corresponding support leg (23), said groove (30) being able to guide a displacement of the rear edge (25.2) of the seating surface structure (25) when a tensile force is applied between the first anchoring point (12) and the second anchoring point (13).

10. Aircraft seat (22) according to any one of the claims 6 to 9, **characterized in that** it includes a protection cover (35) for the energy absorber (10).
